Europäisches Patentamt

European Patent Office

Office européen des brevets

(11) Veröffentlichungsnummer: **0 394 882**

**A1**

(12) **EUROPÄISCHE PATENTANMELDUNG**

(21) Anmeldenummer: 90107587.9

(22) Anmeldetag: 21.04.90

(51) Int. Cl.⁵: **F03D 7/02**

(30) Priorität: 25.04.89 DE 3913505

(43) Veröffentlichungstag der Anmeldung:
**31.10.90 Patentblatt 90/44**

(84) Benannte Vertragsstaaten:
**BE DE DK ES FR GB GR IT NL SE**

(71) Anmelder: **Holzem, Astrid**
**An den Hüren 51**
**D-4050 Mönchengladbach 1(DE)**

(72) Erfinder: **Holzem, Astrid**
**An den Hüren 51**
**D-4050 Mönchengladbach 1(DE)**

(74) Vertreter: **Bergen, Klaus, Dipl.-Ing. et al**
**Patentanwälte Dr.-Ing. Reimar König**
**Dipl.-Ing. Klaus Bergen Wilhelm-Tell-Strasse**
**14 Postfach 260162**
**D-4000 Düsseldorf 1(DE)**

(54) **Flügel mit aerodynamischer Bremse für Windkraftmaschinen.**

(57) Flügel (1) mit aerodynamischer Bremse für Windkraftmaschinen, mit einem sich radial längs der Flügelsaugseite erstreckenden, flexiblen Faltenband als Störkörper (6), das an seinen Längsseiten dichtend eingespannt ist und an den Querseiten enge Spalte zu den Endscheiben hat. Wird der Druck in einem von dem als Störkörper (6) dienenden Faltenband abgedeckten Kanal (5) erhöht, so biegt sich das Faltenband aus und erzeugt eine Störschwelle, die einen Strömungsabriß bewirkt. Als Druckquelle dient unterstützend die unter Fliehbeschleunigung befindliche Luftsäule innerhalb des Kanals (5), in den von der Flügelwurzel her Zuluft eingespeist wird. Der Druck im Kanal wird beispielsweise durch Vergrößerung des Durchlaßquerschnitts einer am Kanaleinlaß angeordneten Innendrossel (4) gegenüber dem einer Außendrossel (7) erhöht, über die der Kanal (5) mit einer Unterdruckquelle verbunden ist. Die Innendrossel (4) wird bei Überschreitung der zulässigen Drehzahl bzw. des zulässigen Drehmoments geöffnet.

Fig.1

Fig.2

## Flügel mit aerodynamischer Bremse für Windkraftmaschinen

Die Erfindung betrifft einen Flügel für Windkraftmaschinen mit einem verstellbaren Störkörper an der Saugseite des Flügels zur Erzeugung eines Strömungsabrisses zwecks aerodynamischer Bremsung. Die Verstellung erfolgt durch Veränderung des Luftdruckunterschieds, der unmittelbar am Störkörper wirksam ist und sie wird abhängig gemacht vom Anstieg der Drehzahl und/oder des Drehmoments vom Flügel.

Aus der europäischen Offenlegungsschrift 0 283 730 ist eine aufblasbare Membran zur Veränderung des Druckfeldes an einem umströmten Flügelprofil bekannt. Durch die dehnelastische Membran über dem gesamten Flügelprofil ist bei Erhöhung des Innendrucks eine stetige Erhöhung der Wölbung möglich, so daß der Auftrieb ansteigt. Würde die Membran nur ein kurzes Stück der Flügelprofillänge überdecken, so könnte unter Innendruck eine zum Strömungsabriß führende Störschwelle entstehen.

Dazu wäre eine erhebliche, nachteilige Drucksteigerung und Überdehnung der Membran erforderlich. Bei Drucksenkung, wenn also die Membran zumindest teilweise wider am Flügelprofil anliegt, entsteht durch Nachkriechen Reibung an den Oberflächen. Bei Verwendung von Luft als Druckmedium ist Verschleiß die Folge.

Aus der deutschen Offenlegungsschrift 28 44 262 ist es bekannt, das Innere eines um seine Längsachse drehbaren Außenflügels durch Fanghutzen (Einlauföffnungen) mit dem Staudruck der Anströmung aufzupumpen. Auf der Saugseite des Außenflügels drehbar gelagerte und federbelastete Störklappen werden beim Anstieg der Drehzahl bzw. des Staudrucks durch Drehung um eine radiale Achse geöffnet und erzeugen einen Strömungsabriß am Außenflügel. Die unmittelbare und ständige Entnahme von Luft unter dem Staudruck der Anströmung hat zumindest den Nachteil, daß Fremdkörper mit hoher Geschwindigkeit über die Fanghutze unter die Klappen dringen und sich dort festsetzen können. Außerdem stellt die Fanghutze bei Nennbetrieb ein nachteiliges Strömungshindernis bar.

Mit dieser bekannten Ausführung läßt sich aber nur dem Drehzahlanstieg, jedoch nicht dem Anstieg des Drehmomentes entgegenwirken.

Der Erfindung liegt die Aufgabe zugrunde, unter Behebung der bisherigen Nachteile einen pneumatisch verstellbaren Störkörper vorzusehen, der bei einfacher Bauweise eine hohe Zuverlässigkeit und Wirksamkeit in sich vereinigt. Mit der Erfindung und entsprechenden meß- und regelungstechnischen Mitteln wird es möglich, den Anstieg von Drehzahl und Drehmoment des Flügels schnell und sicher zu reduzieren und damit eine Schonung von Getriebe und Generator zu erreichen.

Zur Lösung der Aufgabe wird gemäß einem Merkmal der Erfindung folgendes vorgeschlagen: Ein radial innerhalb des Flügels verlaufender Kanal wird durch einen verstellbaren Störkörper nach außen dichtend abgedeckt. Die Verstellung erfolgt durch Veränderung des Kanaldrucks. So ergibt sich bei erhöhtem Kanaldruck eine Ausbiegung des flexiblen Störkörpers nach außen.

Vom Bereich der Flügelnabe her führt eine Zuleitung unter Umgebungsdruck oder unter einem durch ein Hilfsgebläse erhöhten Vordruck Luft über eine auf kleinerem Flügelradius liegende, sogenannte Innendrossel in den Kanal. Von dort fließt die Luft über eine auf größerem Flügelradius befindliche, sogenannte Außendrossel zu einer Stelle sehr niedrigen statischen Drucks an der Flügelspitze. Diese Stelle kann der engste Querschnitt eines Venturirohres sein. Im Kanal ist die Luftsäule der Fliehbeschleunigung ausgesetzt mit einer Druckzunahme zur Flügelspitze hin, die etwa der Größe der Staudruckzunahme der äußeren Anströmung entspricht. Daher läßt sich der Kanaldruck gegenüber dem statischen Druck auf der Saugseite des Störkörpers durch weiteres Öffnen der Innendrossel bzw. auch durch weiteres Schließen der Außendrossel erhöhen, wodurch der Störkörper aus der strömungsgünstig anliegenden Normallage am Flügel, eine Störschwelle bildend, herausgebogen wird. Durch Schließen der Innendrossel bzw. Öffnen der Außendrossel läßt sich der Kanaldruck absenken, weil dadurch der niedrige statische Druck im Venturirohr in dem Kanal an Einfluß gewinnt. Damit wird der Störkörper wieder zum Anliegen gebracht und die Störschwelle verschwindet. Somit wird in vorteilhafter Weise auf die problematische Entnahme von Stauluft aus der Anströmung verzichtet. Außerdem sind durch einen Vorzeichenwechsel - Druck wird entweder negativ oder positiv - des Kanaldrucks gegenüber dem Druck auf der Saugseite keine besonderen Vorspannfedern am Störkörper erforderlich.

Statt des Venturirohres läßt sich auch eine Niederdruckquelle schaffen, die vor allem bei anliegendem Störkörper keinen wesentlichen Strömungswiderstand verursacht und unempfindlich gegen auftreffende Fremdkörper ist. Bei anliegendem Störkörper ist der Sog auf der oberen Flügelnase am stärksten. Dort kann eine erste Öffnung als Teil einer Außendrossel dienen, die den Störkörper anliegend hält, unterstützt durch dessen eigene Rückfederung.

Bei ausgebogenem Störkörper wird an dessen höchster Erhebung der Sog, d.h. die Ausbeulkraft am stärksten, die ohne besondere Vorkehrung zu einer unerwünscht monostabil ausgebogenen Lage führen würde. Wird nahe der höchsten Erhebung als ein weiterer Teil einer Außendrossel eine zweite Öffnung im Störkörper vorgesehen, so kann sich beim Schließen der Innendrossel der starke Sog auf die Innenseite des Störkörpers übertragen, so daß die überhöhte Ausbeulkraft verschwindet und sich der Störkörper, durch eigene Rückfederung unterstützt, infolge der wieder dominierenden Sogwirkung der ersten Öffnung anlegt.

Damit sich beide Öffnungen in der Wirkung nicht gegenseitig stören, sind sie jeweils durch Rückschlagklappen abgedeckt, die sich zur Leeseite der äußeren Anströmung gegen geringe Federkraft bei Druckunterschied hochklappen lassen.

Die Klappen können auch in sich federn und sehr dünn sein, so daß ·sei im geschlossenen Zustand die Umströmung nicht stören. Die Klappe auf der zweiten Öffnung ist bei anliegendem Störkörper völlig geschlossen, während die Klappe auf der ersten Öffnung nur soweit minimal angehoben sein kann, daß noch genügend Sog von der Nase unter den Störkörper gelangt.

In weiterer Ausgestaltung der Erfindung wird ein Störkörper vorgeschlagen, der als flexibles und schmales Band radial längs des Flügels verlaufende Falten hat. Dieses Band, im folgenden Faltenband genannt, überdeckt den Kanal und ist an seinen Längsseiten dichtend eingespannt. Die Falten ermöglichen mit besonders geringer Werkstoffbeanspruchung die notwendige Breitenänderung des Faltenbandes beim Aus- und Einbiegen. Die Falten weisen nach innen in den Kanal hinein. Sie stören daher die äußere Umströmung nicht und benötigen auch keinen zusätzlichen Einbauraum. Infolge der Abdichtung an den Längsseiten ergibt sich ein besonders niedriger mittlerer Luftverbrauch, damit auch ein geringerer Kanalquerschnitt, ein kleines Venturirohr und die Möglichkeit einer effizienten Vorwärmung und Filterung der Zuluft. Unter diesen Gegebenheiten ist es möglich, mit geringem Aufwand und hoher Betriebssicherheit große Anteile der Flügellänge, z.B. mehr als 30% von der Flügelspitze aus, mit einem Faltenband zu versehen, das dann eine wirksame aerodynamische Bremsung ergibt. Mit dem geringen Einbauraum des Faltenbandes wird die tragende Struktur des Flügels nur wenig beeinträchtigt.

Da das Faltenband in sich keine große Biegesteifigkeit hat, genügen bereits geringe Druckunterschiede zum völligen Ausbiegen oder Anliegen in der Normallage. Oberhalb einer Mindestausbiegung zum Erzeugen eines ausgeprägten Strömungsabrisses muß jedoch eine maximal zulässige Ausbiegung durch Anschläge definiert sein. Dann bleibt die Biegebeanspruchung zur Erzielung einer sehr hohen Lastwechselzahl gering. Die Höhe der Ausbiegung ist aufgrund des biegeweichen Faltenbandes, des relativ geringen Maximaldrucks im Kanal und der Rückwirkung der saugseitigen Strömung nicht proportional zum Kanaldruck oder zum Öffnungsgrad einer der Drosseln.

Aus Gründen der Regelstabilität bei der angestrebten Drehzahl- und Drehmomentregelung ist jedoch wenigstens eine annähernde Proportionalität zwischen dem Öffnungsgrad z.B. der Innendrossel und dem aerodynamischen Bremsmoment erforderlich.

Die Proportionalität ist in überraschender Weise möglich, und zwar mittels der Anschläge, weil der voll ausgebogene radiale Längenanteil des Faltenbandes beinahe proportional zum Öffnungshub und zum Bremsmoment proportional ist.

Das Faltenband kann beispielsweise an beiden Längsseiten Faltungen haben. Zur Begrenzung der maximal zulässigen Ausbiegung dient eine jeweils der Faltung gegenüberliegende Anschlagfläche im Kanal.

In weiterer Abwandlung kann ein auf halber Breite längs geschlitztes Faltenband eine oder mehrere Längsfalten haben, die, den Schlitz überbrückend, in den Kanal hineinragen. Ein Vorsprung am Scheitel einer Falte begrenzt die Ausbiegung gegen einen Anschlag im Kanal. An den in der Höhe beweglichen Querseiten der diversen Faltenbandausführungen wird ein enger, berührungsfreier Dichtspalt durch auf den Flügel aufgesetzte dünne Endscheiben, parallel zu den Querseiten, geschaffen. Alternativ können die Querseiten dichtend fixiert werden, ähnlich wie die Längsseiten. Die nötige Auf- und Abwärtsbeweglichkeit des Faltenbandes nimmt dann wegen der hohen Flexibilität rasch mit der Entfernung von den Querseiten zu.

Möglichst geringe Formfehler sind zur Vermeidung von Strömungsverlusten in der Normallage angesichts der großen Länge des Faltenbandes insbesondere bei Laminarflügeln von Bedeutung. Das Faltenband paßt sich in der Normallage den durch Stützflächen vorgegebenen strömungsgünstigen Profil konturen an der Saugseite des Flügels an. Günstige Voraussetzungen dafür bietet bei kleinen Flügeln ein stranggepreßtes Flügelprofil, z.B. aus Leichtmetall, welches unmittelbar den Kanal nebst Anschlägen, Stützflächen und Längsnuten zum Einschieben des mit Paßfedern versehenen, z.B. aus thermoplastischem Kunststoff extrudierten Faltenbandes enthält. Größere Flügel bestehen meist aus faserverstärkten Kunstharzen. Hier empfiehlt sich eine maßgenaue, extrudierte oder stranggepreßte Fassung, die alle bisher erwähnten Einzelheiten zur Aufnahme des Faltenbandes enthält und die im Flügel eingebaut wird.

Zwischen der aus fertigungstechnischen Gründen meist grob tolerierten Auflagefläche des Flügels und der Unterseite der Fassung sind gummielastische Zwischenlagen zu empfehlen, die, z.B. durch individuelles Anziehen von Schrauben, vorgespannt werden. Dadurch ist die örtliche Höhenlage der Fassung bündig mit der Flügeloberfläche einstellbar. Die Schrauben können auch in strömungsgünstiger Weise innerhalb des Kanals angeordnet sein.

Für eine einfache Drehzahlregelung kann vorzugsweise die Innendrossel als Fliehkraftventil ausgeführt sein, bei dem der Öffnungshub eines Schließkörpers gegen eine Vorspannfeder mit der Fliehkraft bzw. mit der Drehzahl zunimmt und die Bremsung einleitet.

Wenn am Fliehkraftventil ein Teil der Vorspannfederkraft durch eine elektromagnetische Kraft ersetzt wird, so kann der Öffnungshub auch von außen, z.B. durch elektrische Messung des Drehmoments, der Schlagbeschleunigung, der Schwenkbewegung, der Vibration oder auch ferngesteuert von außen, zusätzlich beeinflußt werden. Die Schwenkbewegung großer Flügel wird erheblich durch die Gravitation beeinflußt, die zur Vermeidung überflüssiger Bremsung zu kompensieren ist. Dies ist möglich durch ein elektronisches System, das den momentanen Drehwinkel des Flügels relativ zur Erde erfaßt und daraus ein sinusförmiges Signal, z.B. zur Überlagerung der Schwenkbewegung, ableitet. Außerdem ist die Rückmeldung zur Präzisierung der Einflußnahme nützlich.

Bei einer weiteren Ausführung kann das Drehmoment von der Nabe zum Getriebe durch eine genügend drehelastische Welle oder eine entsprechende Kupplung übertragen werden. Hierbei kann die Rotordrehzahl, z.B. infolge eines Böenangriffs, kurzzeitig ohne wesentliche Erhöhung des Getriebeeingangsmomentes ansteigen. Der nominelle Verdrehwinkel der Welle entspricht dem am Getriebeeingang zulässigen Drehmoment. Die Erhöhung des Verdrehwinkels wird elektrisch gemessen und führt zur Abnahme der elektromagnetischen Kraft am Fliehkraftventil.

Ebenfalls kann die Erhöhung des Verdrehwinkels zur unmittelbaren mechanischen Öffnung eines die Innendrossel repräsentierenden Drehmomentventils dienen, das auf der Rotornabe sitzt.

Fliehkraft- und Drehmomentventil können auch pneumatisch parallel geschaltet sein. Zusätzlich ist auch eine Regelung des Flügelschlagens auf mechanisch-pneumatisch Weise möglich. Ein geeignetes Schlagventil ist dem Fliehkraftventil ähnlich aufgebaut. Das Schlagventil ist im Flügel so eingebaut, daß eine windabwärtsgerichtete Schlagbeschleunigung das Ventil öffnet. Entsprechend kann auch ein elektronischer Schlagsensor das Fliehkraftventil elektromagnetisch beeinflussen. Das Schlagventil, wie auch der Schlagsensor, wirken als ein Vorhalt zweiter Ordnung relativ zum Verdrehwinkel der Welle oder dem übertragenen Drehmoment. Daher verbessert es das dynamische Verhalten der Drehmomentregelung.

Wenn die Drehzahl eines Wechselstromgenerators z.B. durch das Netz synchronisiert wird, muß nun zur Vermeidung von Überschneidungen der Sollwert des Fliehkraftventils geringfügig oberhalb der Synchrondrehzahl eingestellt sein. Dabei setzt das Fliehkraftventil erst bei geringfügig angestiegener Turbinendrehzahl ein. Es wirkt als Vorhalt erster Ordnung relativ zum Verdrehwinkel und verbessert die Regelung zusätzlich zum Schlagventil.

Ein Vorhalt erster Ordnung kann ebenfalls durch die zeitliche Ableitung eines Signals vom Verdrehwinkel, welches auf das Fliehkraftventil einwirkt, erzielt werden. Auch ist auf einfache Weise der Verdrehwinkel mit an sich bekannten Methoden pneumatisch differenzierbar zur Betätigung eines Vorhaltventils, das parallel zum Drehmomentventil wirkt. Andererseits kann ein derartiges Vorhaltventil auch unmittelbar das Drehmomentventil überlagern.

Bei zwei oder mehr Flügeln kleinerer Baugröße kann vereinfacht eine gleichmäßige Verteilung des Bremsmomentes auf die Flügel dadurch erreicht werden, daß nur eine Innendrossel allen Kanälen der einzelnen Flügel gemeinsam vorgeschaltet ist. Wenn die Außendrosseln einander gleiche Durchlaßquerschnitte und alle Venturirohre einander gleiche Abmessungen haben, stellt sich in jedem Kanal auch der gleiche radiale Druckverlauf mit dem gleichverteilten Bremsmoment ein.

Die Bauweise leistungsfähiger Flügel mit Faltenband muß besonders wegen der vergleichsweise höheren Komplexität gegenüber konventionellen Flügeln besonders optimiert werden. Eine dazu geeignete Flügelbauweise erbringt dann insgesamt Vorteil wegen der kleineren Dimensionierung von Nabe, mechanischer Bremse, Getriebe, Generator, Turmkopf usw. Außerdem sind eine aufwendige Flügelverstellung und eine besondere aerodynamische Bremse an der Flügelspitze nicht mehr erforderlich. Als zusätzlicher Vorteil wird bei wechselnden Winden bzw. in turbulenten Gebieten die Windenergieausbeute höher sein, weil das Flügelprofil zur Verringerung der Belastung nicht auf schnellen natürlichen Abriß entworfen werden muß. Vielmehr können Anstellwinkel und Flügelverwindung so ausgelegt werden, daß sich wegen der schnellen und genaueren Künstlichen Abrißregelung durch das Faltenband ein großer Abstand zum natürlichen Abriß ergibt.

Ein geeigneter Flügel besteht aus einer extrudierten Schale mit integriertem Obergurt, Schubstegen und Nuten, sowie einem separat extrudierten Untergurt. Die Holmgurte werden vor dem Zusammenbau spangebend bearbeitet, so daß deren Dicke stetig von der Flügelwurzel bis zur Spitze abnimmt. Unterhalb von 60% der Flügellänge in Richtung der Wurzel ist das Faltenband und auch ein originär hochwertiges Flügelprofil nicht erforderlich. Stattdessen wird zunehmend die Festigkeit wichtiger. Daher wird mit Annäherung an die Flügelwurzel der Abstand der Holmgurte vergrößert.

Bei jedem Abriß auf der Saugseite entsteht ein positives Kippmoment um die originäre Neutralachse des Flügels. Ist der Flügel in seinem Aufbau zumindest teilweise um die Neu tralachse gegen ein Vorspannmoment drehbar ausgelegt, so bewirkt auch der künstliche Abriß eine positive Drehung, d.h. der Anstellwinkel nimmt ab. Außer durch den Abriß wird dann der Auftriebsanstieg, d.h. Schlagbewegung und Anstieg des Antriebsmoments, noch wirksamer begrenzt.

Bei einer einflügeligen Windkraftmaschine werden die Holmgurte nahtlos bis zum Gegengewicht verlängert, so daß ansonsten kritische Stoßstellen wegfallen. Die gewünschte Flügelverdrehung kann leicht vor dem Zusammenbau voreingestellt werden, da dann die Verdrehsteifigkeit noch gering ist.

Über die erwähnte Zuführung von vorgewärmter Gebläseluft hinausgehend, ist gegen eine bereits vorhandene Vereisung nach längerem Stillstand eine elektrische Widerstandsheizung geeignet, welche die luftführenden Teile im Flügel begleitet.

Die Erfindung wird nachfolgend anhand der in den Zeichnungen dargestellten Ausführungsbeispiele näher erläutert. Es zeigen:

Fig. 1 den zur Flügelspitze weisenden Teil eines Flügels, auf die Saugseite gesehen;

Fig. 2 verschiedene Druckverläufe längs des Flügels gemäß Fig. 1;

Fig. 3 einen Profilschnitt (vergrößert) durch einen Flügel entlang der Linie I-I von Fig. 1;

Fig. 4 im Querschnitt ein anliegendes Faltenband mit einer Falte in der Normallage;

Fig. 5 ein ausgebogenes Faltenband gemäß Fig. 4;

Fig. 6 ein Faltenband mit zwei Falten in der Normallage;

Fig. 7 ein ausgebogenes Faltenband gemäß Fig. 6;

Fig. 8 ein mittig längsgeschlitztes Faltenband in Normallage;

Fig. 9 ein ausgebogenes Faltenband gemäß Fig. 8;

Fig. 10 einen Schnitt in Flügellängsrichtung entlang der Linie II-II durch eine der Fig. 5, 7 oder 9;

Fig. 11 eine in einen Flügel eingebaute Fassung im Profilschnitt;

Fig. 12 ein einfaches Fliehkraftventil;

Fig. 13 ein Fliehkraftventil mit Elektromagnet und Hubrückmeldung;

Fig. 14 einen Flügel mit Nabe, Hohlwelle, Verdrehwinkelgeber sowie Luftzuführung;

Fig. 15 einen Flügel mit Nabe, Hohlwelle und einem Drehmomentventil;

Fig. 16 einen Schnitt (vergrößert) entlang der Linie III-III durch das Drehmomentventil gemäß Fig. 15;

Fig. 17 schematisch die Parallelschaltung von Fliehkraft- und Drehmomentventil;

Fig. 18 eine bei mehreren Flügeln den Kanälen vorgeschaltete Innendrossel;

Fig. 19 eine extrudierte Schale;

Fig. 20 einen extrudierten Untergurt;

Fig. 21,22,23,24 verschiedene Profilquerschnitte eines Flügels mit extrudierter Schale und Untergurt; und

Fig. 25 einen Flügel mit einer von zwei im Faltenband angeordneten Öffnungen gebildeten Außendrossel, im Querschnitt dargestellt.

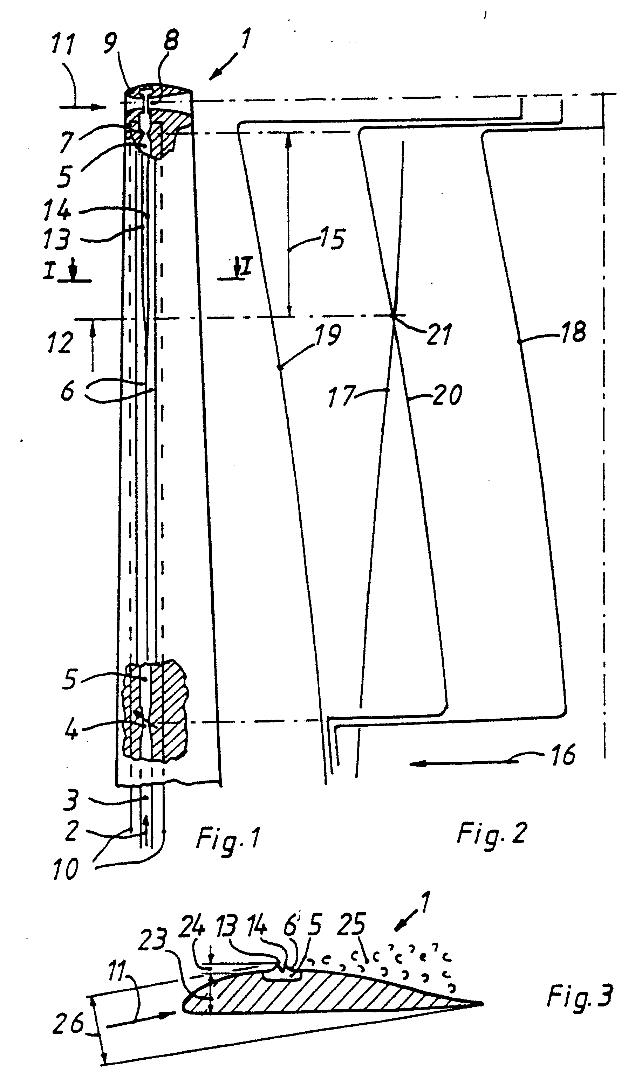

Fig. 1 zeigt als Beispiel schematisch den äußeren Teil eines Flügels 1. Dieser .Teil kann sich über mehr als 30% der gesamten Flügellänge erstrecken. Innerhalb des Flügels 1 strömt Luft in Richtung des Pfeils 2 über eine Luftzuleitung 3 zu einer Innendrossel 4, an die sich der nach außen abgedichtete radiale Kanal 5 anschließt, der von einem Faltenband 6 abgedeckt ist. Der Kanal 5 leitet die Luft radial nach außen über die Außendrossel 7 zum engsten Querschnitt 8 eines Venturirohres 9 an der Flügelspitze. Eine Widerstandsheizschleife 10 ist gestrichelt angedeutet und begleitet die genannten luftführenden Teile. Der Pfeil 11 weist in Anströmrichtung des Flügels 1 in der Zeichenebene. Das Faltenband 6 ist von unten bis zum Radius 12 in der Normallage bündig in die saugseitige Flügeloberfläche einbezogen. Oberhalb vom Radius 12 bis zur Flügelspitze befindet sich das Faltenband 6 im ausgebogenen Zustand, erkennbar an einer durch eine vordere Kante 13 und eine hintere Kante 14 erzeugten Störschwelle, die sich über die momentane Ausbiegungslänge 15 erstreckt.

Zur weiteren Verdeutlichung dient Fig. 2, welche verschiedene Druckverläufe längs des Flügels 1 gemäß Fig. 1 bei verschiedenen Öffnungsgraden der Innendrossel 4 zeigt. In Richtung des Pfeils 16 nimmt der jeweilige statische Druck zu. Die Kurve 17 entspricht dem mittleren statischen Druck an der Saugseite des Flügels 1 im Bereich des Faltenbandes 6. Die Kurve 18 entspricht dem Druck im Kanal 5, wenn die Innendrossel 4 wesentlich mehr Druckabfall als die Außendrossel 7 hat. Da hierbei der Druck im Kanal 5 überall unterhalb der Kurve 17 liegt, ist das Faltenband 6 abweichend von Fig. 1 überall in der Normallage. Wird die Innendrossel 4 nun gegenüber der Außendrossel 7 weiter geöffnet, so stellt sich der Kanaldruck gemäß der Kurve 19 oberhalb von Kurve 17 ein, so daß das Faltenband im Gegensatz zu Fig. 1 auf seine ganze Länge ausgebogen ist.

Schließlich ergibt sich das in Fig. 1 dargestellte, auf einer Ausbiegungslänge 15 ausgebogene Faltenband 6, wenn beide Drosseln in etwa vergleichbaren Druckabfall erzeugen, d.h. teilweise geöffnet sind. Der Kanaldruck folgt dabei der Kurve 20, wobei der Schnittpunkt 21 mit der Kurve 17 einen Druckausgleich anzeigt, der den Übergang von der Normallage in die ausgebogene Lage bei Radius 18 in Fig. 1 bewirkt. Es hat sich herausgestellt, daß sich der Schnittpunkt 21 ziemlich proportional mit der Verstellung der Innendrossel 4 verschiebt, auch wenn der Querschnitt der Außendrossel 7 unverändert bleibt.

Fig. 3 zeigt vergrößert einen Profilschnitt längs der Linie I-I von Fig. 1 mit ausgebogenem Faltenband 6, das den Kanal 5 abdeckt. Infolge der Anströmung des Flügels 1 in Richtung des Pfeils 11 erzeugt die relativ zur Flügeldicke 23 geringe Höhe der Störschwelle 24 eine ausgeprägte Abreißzone 25. Es genügt bereits eine Höhe von etwa einem Zehntel der Flügeldicke 23. Die Bremswirkung ist vergleichbar mit der Höhe 26 einer quer zur Richtung des Pfeils 11 stehend gedachten Bremsplatte.

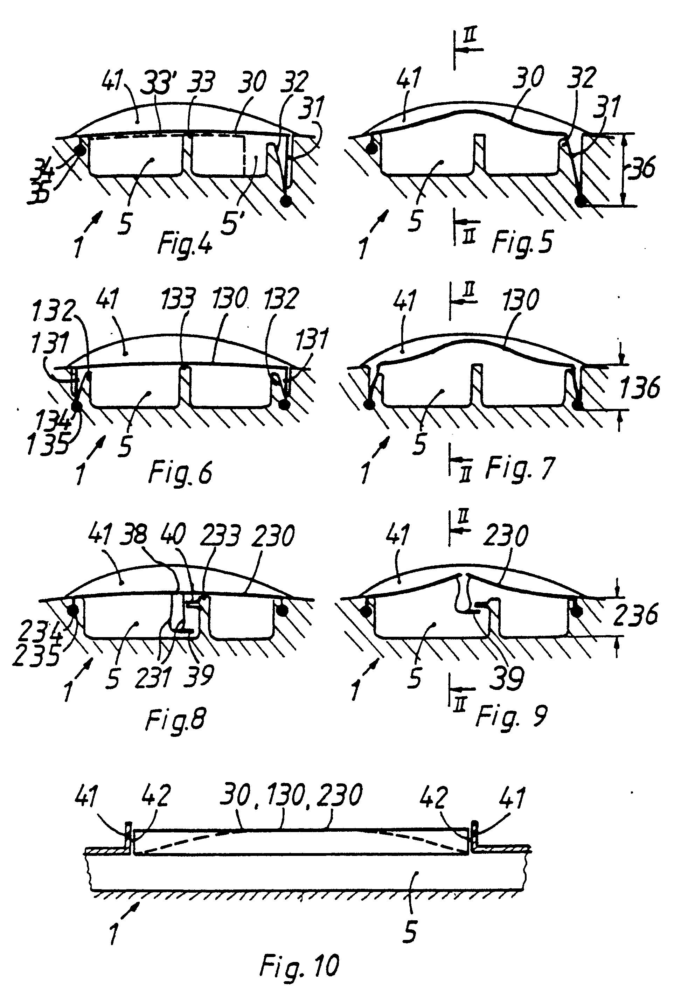

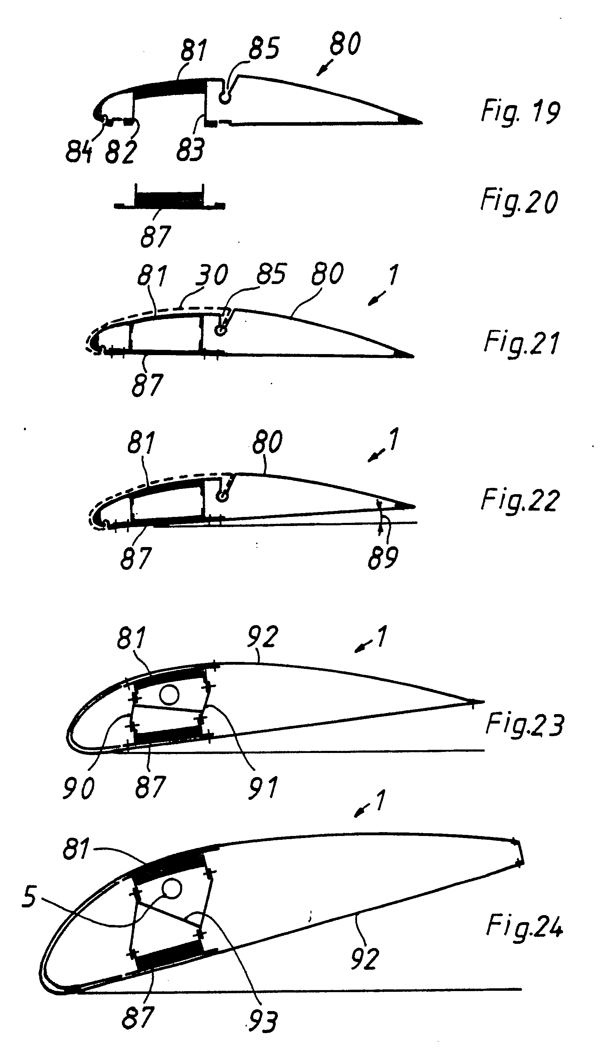

Fig. 4 zeigt im Querschnitt ein Faltenband 30 in der Normallage mit einer Falte 31 an der rechten Längsseite. Ein die Ausbiegung begrenzender Anschlag 32 liegt der Falte 31 gegenüber. Eine oder mehrere, um die jeweilige Dicke des Faltenbandes 30 zurückgesetzte Stützflächen 33 geben eine strömungsgünstige, dem Flügel angepaßte Außenkontur des Faltenbandes 30 in der Normallage vor. Eine Stützfläche 33' kann sich auch über einen weiteren Querschnitt von Kanal 5 erstrecken. Dadurch kann sie mit in die tragende Flügelstruktur einbezogen sein (siehe den gestrichelten Linienzug in Fig. 4). Dann ist die Stützfläche ein Bestandteil des Holms, innerhalb dessen der größte Teil des Kanals verläuft, wobei Abzweigungen 5' den Luftstrom z.B. unter das Faltenband 30 leiten (siehe auch die Fig. 21 und 22). Die Stützflächen werden bei den folgenden Faltenbandvarianten ebenfalls weiter verwendet und sind in Fig. 6 mit 133 bzw. in Fig. 8 mit 233 bezeichnet. Mit Federn 34 (Fig. 4) ist das Faltenband 30 an seinen Längsseiten in Nuten 35 eingeschoben. Dies gilt auch für die Varianten 134, 135 in Fig. 6 und 234, 235 in Fig. 8.

Fig. 5 zeigt das Faltenband 30 gemäß Fig. 4 im ausgebogenen Zustand mit anliegender Falte 31 am Anschlag 32.

Fig. 6 zeigt ein Faltenband 130 mit Falten 131 an beiden Längsseiten in der Normallage.

Fig. 7 zeigt den ausgebogenen Zustand des Faltenbandes gemäß Fig. 6. Bei gleichgroßer Ausbiegung ist die Bauhöhe 136 in vorteilhafter Weise wesentlich kleiner als die Bauhöhe 36 gemäß Fig. 5.

Fig. 8 zeigt ein mittig längsgeschlitztes Faltenband 230 im Querschnitt, ähnlich wie in Fig. 3.

Eine doppelte Falte 231 ragt, den Schlitz 38 abdichtend, in den Kanal 5 hinein. Ein Vorsprung 39 befindet sich am Scheitel einer Falte 231. Auf der Stütze der Stützfläche 233 ist ein Anschlag 40 befestigt, gegen den sich der Vorsprung 39 bei voller Ausbiegung in Fig. 9 legt. Der Schlitz 38 klafft auseinander. Dadurch wird die Abreißwirkung bei gleicher Bauhöhe 236 wie die Bauhöhe 136 in Fig. 7 noch verstärkt.

Fig. 10 zeigt einen Schnitt in Längsrichtung des Flügels 1 durch eine der Fig. 5, 7 oder 9 entlang der Linie II-II mit Endscheiben 41 und Dichtspalte 42 parallel zu den Querseiten der Faltenbänder 30, 130 und 230. Die gestrichelte Linie zeigt alternativ eine stetig ansteigende Schwelle der Faltenbänder 30, 130, 230, weil ihre Querseiten abgedichtet, z.B. auf dem Flügel 1 fixiert sind.

Die Ausführungen gemäß den Fig. 4 bis 9 können auf besonders kostengünstige Weise unmittelbar in einen stranggepreßten Flügel kleiner bis mittlerer Größe integriert sein.

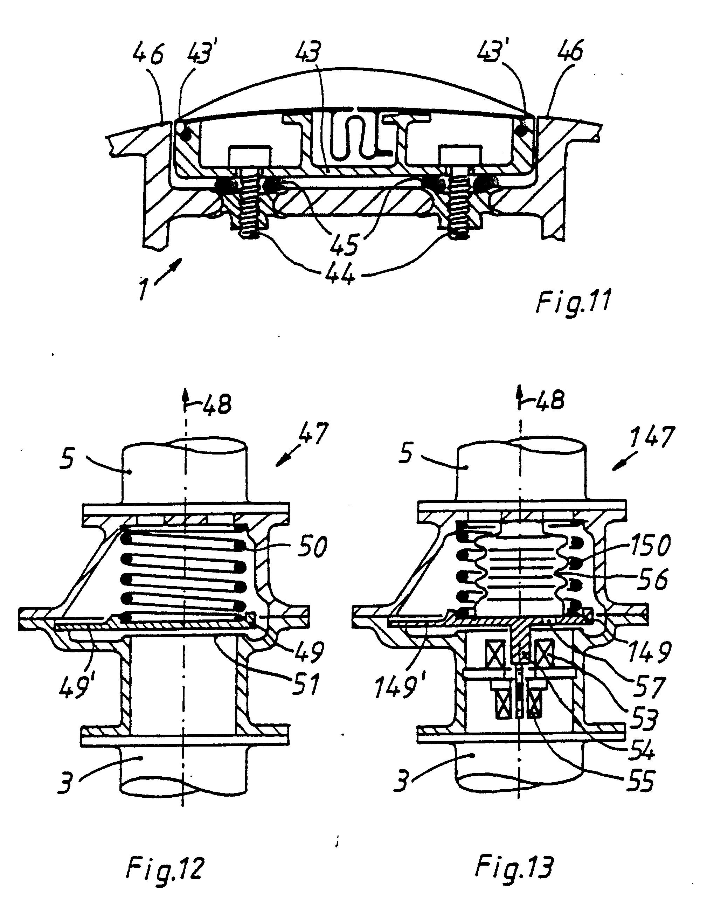

Fig. 11 stellt eine, vorteilhaft in einen größeren Flügel 1 eingebaute, Fassung 43 im Profilschnitt dar. Sie ist maßhaltig extrudiert, integriert die beispielsweise in den Fig. 4 bis 10 enthaltenen Merkmale und wird durch Schrauben 44 im Flügel 1 befestigt. Gummielastische Zwischenlagen 45 erlauben das bündige Einstellen der örtlichen Höhenlage 43' der Fassung 43 mit der Saugseite 46 des Flügels.

Fig. 12 zeigt ein einfaches Fliehkraftventil 47, das als Innendrossel zwischen der Luftzuleitung 3 und dem Kanal 5 eingebaut ist. Die Fliehkraft wirkt in Richtung des Pfeils 48 und hebt den gelenkig am Ventilgehäuse gelagerten Schließkörper 49 bei Überdrehzahl gegen die Vorspannkraft der Feder 50 vom Sitz 51 ab. Derselbe Ventiltyp kann auch als Schlagventil verwendet werden. Hierzu wird das erwähnte Fliehkraftventil 47 so im Flügel 1 eingebaut (nicht dargestellt), daß die Ventilplatte 49 bei einer vorgegebenen Schlagbeschleunigung vom Sitz abhebt.

Fig. 13 zeigt ein Fliehkraftventil 147 in erweiterter Ausführung. Hierbei ist die Vorspannkraft der Feder 150 um einen Betrag reduziert, der nun als Magnetkraft eines Elektromagneten 53 auf den mit einem Anker 54 versehenen Schließkörper 149 übertragen wird. Zur Verringerung von Druckrückwirkung dient ein Ausgleichsbalg 56 in Verbindung mit der Bohrung 57, so daß das Ventil feinfühliger arbeitet. Ein Weggeber 55 ist innerhalb des Ventils 147 angeordnet.

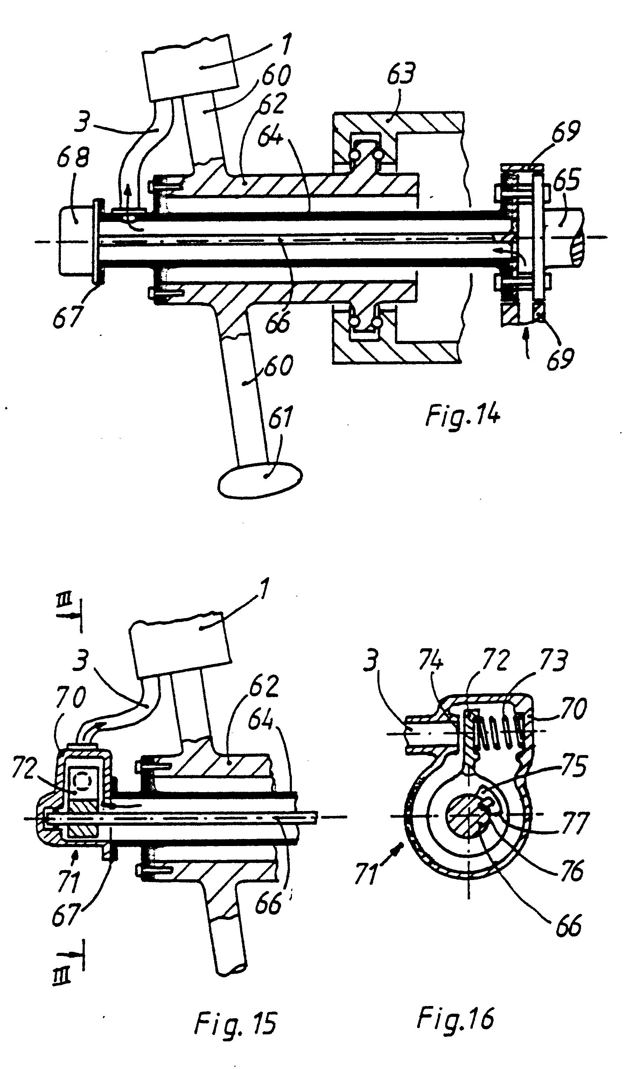

Fig. 14 zeigt als weiteres Beispiel einen einflügeligen Rotor mit einem Flügel 1, der von einem Holm 60 getragen wird, an dessen Ende sich eine Ausgleichsmasse 61 befindet. Der Holm 60 ist an eine Nabe 62 befestigt, die in einem Gestell 63 drehbar gelagert ist. Innerhalb der Nabe 62 überträgt eine drehelastische Hohlwelle 64 das Drehmoment von der Nabe 62 auf die Getriebewelle 65. Eine am rechten Ende der Hohlwelle befestigte Stange 66 reicht durch die Hohlwelle 64 hindurch bis zur Stirnseite 67. Dort ist die Stange 66 mit einem an der Stirnseite 67 angebauten Verdrehwinkelgeber 68 gekuppelt.

Anhand dieses Beispiels läßt sich auch eine geeignete Luftzuführung erläutern. Zuluft vom Kühlgebläse eines Generators strömt gefiltert (nicht dargestellt) durch einen mit einem berührungslosen Dichtspalt versehenen, gestellfesten Stutzen 69 in das Innere der Hohlwelle 64 ein und gelangt von dort aus im Bereich der Stirnseite 67 in die Luftzuleitung 3. Bedingt durch den Überdruck des Kühlgebläses sind spaltbedingte Leckstellen, wie am Stutzen 69, un kritisch. Der Überdruck verhindert das Eindringen von Fremdkörpern. Das folgende Beispiel zeigt anhand der Fig. 15 und Fig. 16 eine besonders einfache und zuverlässige mechanische Drehmomentbegrenzung. Anstelle des Verdrehwinkelgebers 68 von Fig. 14 ist in Fig. 15 unter Beibehaltung der übrigen Anordnung ein Drehmomentventil 71 an der Stirnseite 67 angebaut. Die mit einer Nabe versehene Platte 72 sitzt, begrenzt drehbar, auf dem linken Ende der Stange 67, das im Gehäuse 70 drehbar gelagert ist.

Fig. 16 zeigt eine vergrößerte Schnittdarstellung von Fig. 15 entlang der Linie III-III. Die Platte 72 wird mittels einer am Gehäuse 70 abgestützten Druckfeder 73 gegen den Ventilsitz 74 gedrückt. Eine Lücke gibt einem auf der Stange 66 sitzenden Mitnehmer 76 genügend Freiraum, so daß die Hohlwelle 64 mit dem Gehäuse 70 bis zum Nenndrehmoment gegen den Uhrzeigersinn vorverdreht werden kann, ohne daß sich das Ventil öffnet. Bei Überschreitung des Nenndrehmoments gerät die Fläche 77 in der Platte 72 mit dem Mitnehmer 76 in Kontakt, so daß sich die Platte 72 abhebt.

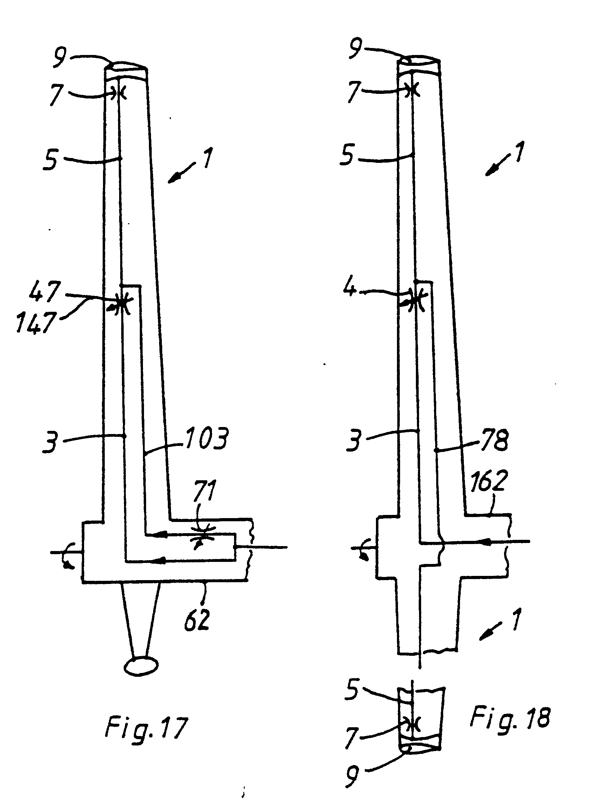

Fig. 17 zeigt eine pneumatische Parallelschaltung von Drehmomentventil 71 an der Nabe 62 gemäß den Fig. 15 und 16 und dem Fliehkraftventil 47, 147 gemäß den Fig. 12 und 13 im Flügel 1.

Fig. 18 zeigt schematisch eine Nabe 162 mit zwei Flügeln 1, 1'. Die Luftzuleitung 3 mündet in der bisher gezeigten Weise in die Innendrossel 4 innerhalb des Flügels 1 ein. Stromabwärts der Innendrossel 4 führt eine Zweigleitung 78 zum Kanal 5' in den Flügel 1'. Die Außendrosseln 7 sind einander gleich dimensioniert. Dasselbe gilt für die Venturirohre 9. Daher stellen sich in den Kanälen 5 gleiche radiale Druckverläufe ein.

Fig. 19 zeigt den Profilquerschnitt einer extrudierten Schale 80 mit integriertem Obergurt 81, Schubstegen 82, 83 sowie Nuten 84, 85 zur Aufnahme des Faltenbandes.

Fig. 20 zeigt den Profilquerschnitt eines extrudierten Untergurts 87.

Fig. 21 zeigt den Profilquerschnitt der Schale 80 aus Fig. 20 und des Untergurts 87 aus Fig. 21 in zusammengebauten Zustand (z.B. durch Nieten, Schrauben) an der Flügelspitze. Die Dicke der Gurte 81, 87 ist vor dem Zusammenbau maschinell auf ein Minimum verringert worden. Das Faltenband 30 ist gestrichelt angedeutet.

Fig. 22 zeigt den Profilquerschnitt des Flügels 1 in einem Bereich von etwa 60% der Flügellänge von der Flügelwurzel aus. Dort hat die Dicke der Gurte bereits zugenommen. Die nötige Flügelverdrehung 89 steigt ebenfalls.

Fig. 23 zeigt den Profilquerschnitt des Flügels 1 im Bereich unterhalb von 60% der Flügellänge; hier wird das Faltenband nicht weiter benötigt. Nur noch die verdickten Gurte 81, 87 bleiben erhalten, der Rest der Schale ist entfernt. Stattdessen ist ein stromlinienförmige Verkleidung 92 um die Gurte herum befestigt. In diesem Bereich sind die Gurte auch mit zunehmendem Abstand auseinandergebogen. Zusätzliche Schubstege 90, 91 überbrücken den Abstand.

Fig. 24 zeigt den Profilquerschnitt nahe der Flügelwurzel oder der Nabe (siehe auch Fig. 17). Die Gurte 81, 87 haben hier die extrudierte Dicke und den maximalen Abstand. Ein Diagonalsteg 92 steift die Gurte zusätzlich aus. Zusätzlich oder stattdessen kann der Zwischenraum zwischen den Gurten, mit Ausnahme des Kanals 5, auch mit Hartschaum gefüllt sein.

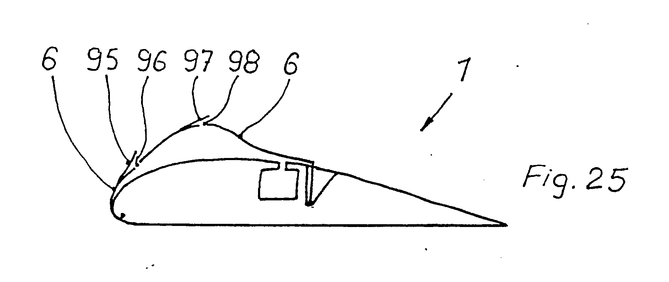

Bei einer im Rahmen der Erfindung bevorzugten Ausführung eines Flügels 1 bilden gemäß Fig. 25 zwei im Faltenband 6 (Störkörper) angeordnete Öffnungen 96, 98 die Außendrossel. Eine erste Öffnung 96 befindet sich oberhalb der Nase bzw. Spitze des Flügels 1 und eine zweite Öffnung 98 nahe der höchsten Erhebung des ausgebogenen bzw. -gebeulten Faltenbandes 6. Falls sich das Faltenband 6 nicht bis zur Flügelnase erstreckt, kann eine Öffnung auch unmittelbar in der Nase des Flügels 1 angeordnet werden. Beide Öffnungen 96, 98 sind durch Rückschlagklappen 95, 97 abgedeckt, die sich jeweils zur Leeseite der Anströmung hochklappen lassen.

Obwohl anhand der Beispiel und Figuren nur Flügel für Rotoren der horizontalachsigen Bauart erläutert werden, ist grundsätzlich der Erfindungsgegenstand auch auf vertikalachsige Windkraftmaschinen anwendbar.

## Ansprüche

1. Flügel mit aerodynamischer Bremse für Windkraftmaschinen, der an einer umlaufenden Nabe befestigt einen elektrischen Generator oder andere Energiewandler antreibt und mit einem von veränderbaren Luftdruck betätigten Störkörper versehen ist, der sich quer zur Anströmung bewegt, **dadurch gekennzeichnet**, daß sich in einem Kanal (5), der radial innerhalb des Flügels (1) verläuft und der auf der Saugseite von dem Störkörper (6) nach außen dichtend abgedeckt ist, eine der Fliehbeschleunigung ausgesetzte Luftsäule befindet, in den Kanal (5) Zuluft über eine Innendrossel (4) hinein und über eine Außendrossel (7) aus dem Kanal (5) heraus zu einer Stelle (9) geringen statischen Drucks nach außen abströmt und der Luftdruck im Kanal (5) durch Veränderung des Durchlaßquerschnitts einer oder beider Drosseln (4, 7) veränderbar ist.

2. Flügel nach Anspruch 1, **gekennzeichnet** durch eine Außendrossel (7) mit einem festen Durchlaßquerschnitt.

3. Flügel nach Anspruch 1 oder 2, **dadurch gekennzeichnet**, daß die Außendrossel (7) in den engsten Querschnitt (8) eines Venturirohres (9) an der Flügelspitze einmündet.

4. Flügel nach Anspruch 1 oder 2, **dadurch gekennzeichnet**, daß zumindest zwei Öffnungen (96, 98) die Außendrossel darstellen, wobei eine erste Öffnung (96) oberhalb der Flügelnase und eine zweite Öffnung (98) nahe der höchsten Erhebung des Störkörpers (6) angeordnet ist und beide Öffnungen (96, 98) durch Rückschlagklappen (95, 97) abgedeckt sind, die sich jeweils zur Leeseite der Anströmung hochklappen lassen.

5. Flügel nach einem oder mehreren der Ansprüche 1 bis 4, **dadurch gekennzeichnet**, daß der Störkörper (6) ein in sich flexibles, quer zur Anströmung ausbiegsames Faltenband (6, 30, 130, 230) ist und radial längs des Flügels (1) verlaufende Falten (31, 131, 231) besitzt.

6. Flügel nach einem oder mehreren der Ansprüche 1 bis 5, **dadurch gekennzeichnet**, daß zumindest eine Längsseite des Faltenbandes (30, 130) mit zum Kanal (5) hin weisenden Falten (31, 131) versehen ist, die zur Begrenzung der Ausbiegung an Anschlägen (32, 132) anliegen.

7. Flügel nach einem oder mehreren der Ansprüche 1 bis 5, **dadurch gekennzeichnet**, daß das Faltenband (230) etwa auf halber Breite eine oder mehrere Falten (231) aufweist und sich am Scheitel einer Falte (231) ein Vorsprung (39) befindet, der sich zur Begrenzung der Ausbiegung an einem Anschlag (40) im Kanal (5) anlegt

8. Flügel nach einem oder mehreren der Ansprüche 1 bis 7, **dadurch gekennzeichnet**, daß auf den Flügel (1) aufgesetzte Endscheiben (41) einen engen Dichtspalt (42) mit den Querseiten des Faltenbandes (30, 130, 230) bilden oder die Querseiten dichtend fixiert sind.

9. Flügel nach einem oder mehreren der Ansprüche 1 bis 8, **dadurch gekennzeichnet**, daß sich das Faltenband (30, 130, 230) an Stützflächen (33, 133, 233) anlegt, deren Lage um die jeweilige Dicke des Faltenbandes gegenüber der strömungsgünstigen Außenkontur des Flügelprofils nach innen versetzt ist.

10. Flügel nach einem oder mehreren der Ansprüche 1 bis 9, **dadurch gekennzeichnet**, daß das Faltenband (30, 130, 230) mit Federn (34, 134, 234) in Längsnuten (35, 135, 235) auf der Saugseite der Flügels eingeschoben ist.

11. Flügel nach einem oder mehreren der Ansprüche 1 bis 10, **dadurch gekennzeichnet**, daß der Kanal (5) mit Stützflächen (33, 133, 233) und Anschlägen (32, 132, 40) sowie die Längsnuten (35, 135, 235) unmittelbar integrierte Bestandteile eines stranggepreßten Flügels (1) oder einer im Flügel (1) eingebauten Fassung (43) sind.

12. Flügel nach einem oder mehreren der Ansprüche 1 bis 11, **dadurch gekennzeichnet**, daß zwischen der Fassung (43) und dem Flügel (1) gummielastische Zwischenlagen (45) sind, die Fassung (43) mit dem Flügel (1) verschraubt ist und Fassungsränder (43') bündig zur Pro filkontur (46) mittels individueller Justierung der einzelnen Schrauben (44) einstellbar sind.

13. Flügel nach einem oder mehreren der Ansprüche 1 bis 12, **dadurch gekennzeichnet**, daß die Innendrossel (7) aus einem Fliehkraftventil (47, 147) mit einem Schließkörper (49, 149) besteht, der radial zum Sitz (51, 151) beweglich von einem elastischen Gelenk (49', 149') geführt ist, sich gegen die Fliehkraft durch eine vorgespannte Feder (50, 150) in den Sitz drückt und bei Anstieg der Fliehkraft vom Sitz abhebt.

14. Flügel nach einem oder mehreren der Ansprüche 1 bis 13, **dadurch gekennzeichnet**, daß im Fliehkraftventil (147) der Hub der Schließkörpers (149) durch einen Elektromagneten (53) veränderbar ist.

15. Flügel nach einem oder mehreren der Ansprüche 1 bis 14, **dadurch gekennzeichnet**, daß der Spulenstrom zum Elektromagneten (53) bei Überdrehzahl durch einen im Flügel (1) eingebauten Fliehkraft- bzw. Erschütterungsschalter oder von außen abgeschaltet wird.

16. Flügel nach einem oder mehreren der Ansprüche 1 bis 15, **dadurch gekennzeichnet**, daß im Fliehkraftventil (147) der Hub des Schließkörpers (149) mittels eines Weggebers (55) meßbar ist.

17. Flügen nach einem oder mehreren der Ansprüche 1 bis 16, **dadurch gekennzeichnet**, daß die Schwenkbewegung in der Umlaufebene des Flügels (1) gemessen und dem Meßwert ein von der Drehlage des Flügels (1) zur Erde abhängiger, sinusförmiger Korrekturwert überlagert wird.

18. Flügel nach einem oder mehreren der Ansprüche 1 bis 17, **dadurch gekennzeichnet**, daß ein dem Fliehkraftventil (47) ähnelndes Schlagventil oder ein elektronischer Schlagsensor, der auf die Spule (53) des Ventils (147) einwirkt, die Schlagbewegung bzw. Schlagbeschleunigung des Flügels (1) erfaßt.

19. Flügel nach einem oder mehreren der Ansprüche 1 bis 18, dadurch gekennzeichnet, daß ein Drehmoment von der Nabe (62) durch eine elastisch verdrehbare Welle, insbesondere Hohlwelle (64), oder durch eine entsprechende Kupplung auf die Getriebewelle (65) bzw. auch unmittelbar auf einen Generator übertragen wird, wobei der Verdrehwinkel entweder elektrisch durch einen Sensor (68) gemessen wird, der auf die Spule (53) einwirkt, oder der Verdrehwinkel unmittelbar ein Drehmomentventil (71) betätigt.

20. Flügel nach einem oder mehreren der Ansprüche 1 bis 19, dadurch gekennzeichnet, daß ein elektrisch differenzierter Verdrehwinkel die Spule (53) überlagert oder ein pneumatisch differenzierter Verdrehwinkel ein dem Drehmomentventil (71) paralleles Vorhaltventil betätigt oder der Verdrehwinkel unmittelbar das Drehmomentventil überlagert.

21. Flügel nach einem oder mehreren der Ansprüche 1 bis 20, dadurch gekennzeichnet, daß von einem Kühlgebläse des Generators gefilterte und vorgewärmte Luft über einen abgedichteten Stutzen (6) zum Lufteinlaß (3) gelangt.

22. Flügel nach einem oder mehreren der Ansprüche 1 bis 21, dadurch gekennzeichnet, daß das Fliehkraftventil (47 bzw. 147), das Drehmomentventil (71), das Schlagventil und das Vorhaltventil für sich oder in verschiedenen Kombinationen zueinander die Einlaßdrossel repräsentieren.

23. Flügel nach einem oder mehreren der Ansprüche 1 bis 22, dadurch gekennzeichnet, daß bei zwei oder mehr Flügeln (1, 1′) eine Einlaßdrossel (4) den Kanälen (5, 5′) und den einzelnen, einander gleichen Auslaßdrosseln (7, 7′) und Venturirohren (9, 9′) gemeinsam vorgeschaltet ist.

24. Flügel nach einem oder mehreren der Ansprüche 1 bis 23, dadurch gekennzeichnet, daß eine Widerstandsheizschleife (10) alle luftführenden Teile im Flügel (1, 1′) begleitet.

25. Flügel nach einem oder mehreren der Ansprüche 1 bis 24, dadurch gekennzeichnet, daß der Flügel (1) aus einer extrudierten Schale (80) mit Schubstegen (82, 83), Nuten (84, 85) und einem Obergurt (81) besteht, die Schale (80) mit einem separat extrudierten Untergurt (87) zusammengebaut ist und Dicke und Abstand der Gurte (81, 87) mit der Annäherung an die Flügelwurzel zunehmen, und optionell der Flügel (1) in sich eine Verdrehung (89) besitzt.

26. Flügel nach einem oder mehreren der Ansprüche 1 bis 25, dadurch gekennzeichnet, daß der Flügen (1) oder ein Teil davon um seine Neutralachse gegen ein Vorspannmoment drehbar ist.

Fig. 1

Fig. 2

Fig. 3

Fig.4

Fig.5

Fig.6

Fig. 7

Fig.8

Fig. 9

Fig. 10

Fig.11

Fig.12

Fig.13

EP 0 394 882 A1

Fig.14

Fig. 15

Fig.16

Fig. 17

Fig. 18

Fig. 19

Fig. 20

Fig. 21

Fig. 22

Fig. 23

Fig. 24

Fig. 25

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-C- 419 563 (AERO-DYNAMO) <br> * Seite 2, Zeilen 42-61 * <br> --- | 1,2,4 | F 03 D 7/02 |
| D,A | DE-A-2 844 262 (WORTMANN) <br> * Seite 11, Zeilen 24-32 * <br> --- | 1 | |
| D,A | EP-A-0 283 730 (MTB) <br> * Spalte 5, Zeilen 44-55; Spalte 9, Zeile 34 - Spalte 10, Zeile 13 * <br> --- | 1 | |
| A | DE-C- 890 630 (HÜTTER) <br> * Seite 2, Zeilen 64-89 * <br> ----- | 13 | |

|  |
|---|
| RECHERCHIERTE SACHGEBIETE (Int. Cl.5) |
| F 03 D |

Der vorliegende Recherchenbericht wurde für alle Patentansprüche erstellt

| Recherchenort | Abschlußdatum der Recherche | Prüfer |
|---|---|---|
| DEN HAAG | 28-07-1990 | DE WINTER P.E.F. |